# EUROPÄISCHE PATENTSCHRIFT

(11) **EP 3 049 879 B1**
(45) Veröffentlichungstag und Bekanntmachung des Hinweises auf die Patenterteilung: **12.09.2018**
(21) Anmeldenummer: 14821486.9
(22) Anmeldetag: 19.08.2014
(51) Int. Cl.: G05D 1/02, B66F 9/06, B66F 9/075, G05B 19/418, B60P 1/02, B60P 1/64

(54) **TRANSPORTFAHRZEUG ZUM TRANSPORT VON LASTREGALEN MIT TEILWEISE AUTONOMEM FAHRBETRIEB**
TRANSPORT VEHICLE FOR THE TRANSPORT OF LOAD SHELVES WITH PARTIALLY AUTONOMOUS OPERATION
VÉHICULE DE TRANSPORT DE RAYONNAGES PRÉSENTANT UN FONCTIONNEMENT PARTIELLEMENT AUTONOME

(30) Priorität: 26.09.2013 DE 102013016118
(43) Veröffentlichungstag der Anmeldung: 03.08.2016
(73) Patentinhaber: Grenzebach Maschinenbau GmbH, 86663 Asbach-Bäumenheim (DE)
(72) Erfinder: MECKLINGER, Siegfried, 86675 Buchdorf (DE); KÜGLE, Bernhard, 86415 Mering (DE)
(74) Vertreter: Kindermann, Peter
(86) Internationale Anmeldenummer: PCT/DE2014/000418
(87) Internationale Veröffentlichungsnummer: WO 2015/043561

(56) Entgegenhaltungen:
- EP-A1- 0 102 706
- BOUGUERRA A ET AL: "An autonomous robotic system for load transportation", EMERGING TECHNOLOGIES&FACTORY AUTOMATION, 2009. ETFA 2009. IEEE CONFERENCE ON, IEEE, PISCATAWAY, NJ, USA, 22. September 2009 (2009-09-22), Seiten 1-4, XP031575813, ISBN: 978-1-4244-2727-7
- DANIEL LECKING ET AL: "Variable Pallet Pick-Up for Automatic Guided Vehicles in Industrial Environments", EMERGING TECHNOLOGIES AND FACTORY AUTOMATION, 2006. ETFA '06. IEE E CONFERENCE ON, IEEE, PI, 30. September 2006 (2006-09-30), Seiten 1169-1174, XP031082663, ISBN: 978-0-7803-9758-3

## Beschreibung

Die vorliegende Erfindung betrifft ein Transportfahrzeug zum störungsfreien Transport von Lastregalen in Werkshallen mit teilweise autonomem Fahrbetrieb.

In einer Vielzahl von Unternehmensbereichen, zum Beispiel dem Handel mit Lebensmitteln und Haushaltsartikeln oder Industrie- und Haushaltsprodukten, liegen Waren in sortenreinen Quellpaletten mit gleichartigen Gebinden in Lastregalen vor. Ein Gebinde kann hierbei ein verpacktes oder unverpacktes Stückgut oder eine Warenzusammenstellung wie beispielsweise eine Kiste, ein Karton oder eine Steige mit Schüttgut oder mehreren Einzelgütern wie Getränkeflaschen oder Molkereiprodukten sein.

Zur Zusammenstellung einer Lieferung an einen bestimmten Kunden müssen hieraus Pakete mit unterschiedlicher Bestückung oder Gebinden zusammengestellt werden.

Das Herbeischaffen einzelner Bestandteile einer solchen Lieferung kann hierbei händisch erfolgen oder mittels automatisch geführter Fahrzeuge. Solche so genannten AGVs (automatic guided vehicles) können mobile Roboter oder speziell für den jeweiligen Verwendungszweck konstruierte Fahrzeuge sein, die mit einem speziellen Führungs- und Steuerungsverfahren von einem Ort zu einem anderen Ort bewegt werden.

Herkömmliche automatisch geführte Fahrzeuge, mit denen zum Beispiel Materialien in Fabriken und Lagerhäusern bewegt werden, weisen eine minimale Punkt-zu-Punkt-Bewegungssteuerung auf. Die meisten solcher Systeme verwenden AGVs, die einer festen Leitspur folgen. Im Allgemeinen handelt es sich hierbei um einen Hochfrequenz-Sendeantennendraht, der im Fabrikboden versenkt angeordnet ist, einen auf den Boden aufgemalten reflektierenden Streifen, oder ein auf den Boden aufgeklebtes reflektierendes Band. Solche Leitspuren sind jedoch ersichtlich sehr verletzlich und unzuverlässig.

Alle diese Bewegungssteuerungen begrenzen die Bewegungsfreiheit der einzelnen AGV's, indem diese gezwungen werden einem physikalisch festgelegten Weg zu folgen.

Die meisten solcher Systeme verlassen sich auf die fahrzeugeigene Annäherungs-Detektion, um Kollisionen mit anderen Fahrzeugen, unbewegten Objekten oder menschlichem Personal zu vermeiden. In solchen Systemen können sich die AGV's nur in einer Richtung längs der von ihnen verfolgten Spur bewegen.

Solche Systeme erreichen eine Punkt-zu-Punkt-Bewegung durch Implementieren von Steuerschemata und Verwenden frei beweglicher AGV's mit programmierbaren bidirektionalen Wegen. Hierdurch wird erreicht, dass sich mehrere AGV's ohne Kollisionen oder übermäßige Staus gleichzeitig auf denselben Wegen befinden. Diese Verfahren maximieren den Freiheitsgrad der AGV-Bewegung. Das Steuerschema implementiert hierbei ein Schema der "statischen" Kollisionsvermeidung für AGV-Systeme. Im Wesentlichen wird dabei ein Computerprogramm verwendet zum Untersuchen der jeweiligen Umgebung eines AGV's, um nur solche Wege zu ermitteln, die für AGV's befahrbar sind. Ein weiteres Zuteilungsprogramm zieht hieraus die erforderlichen Daten, um AGV's im jeweiligen System von einem Punkt zu einem anderen Punkt zu bewegen, ohne dass zwei AGV's gleichzeitig denselben Weg befahren.

Aus der den Oberbegriff des Patentanspruchs 1 bildenden Druckschrift EP 0 102 706 A1 ist ein Transportfahrzeug zum störungsfreien Transport von Lastregalen in Werkshallen mit teilweise autonomem Fahrbetrieb bekannt. Hierbei ist ein Fahrzeugkörper mit einer Trägerplatte zum Aufnehmen und Transportieren eines Lastregals mit Transportgut, mit zwei, beidseitig in der Mitte des Fahrzeugkörpers an jeweils einer gesondert gelagerten Drehachse separat angetriebenen Antriebsrädern vorgesehen, wobei an der Vorderseite und an der Hinterseite des Fahrzeugkörpers jeweils mindestens ein Stützrad vorgesehen ist. Ferner ist eine Querlenkung vorhanden, die vertikale Bewegungen der Antriebsräder ermöglicht, sowie ein zentral angeordnetes Stellelement, wobei das Transportfahrzeug ein System zur Energieversorgung des Fahrzeugkörpers aufweist und im Fahrzeugkörper Stellraum für entsprechende Energiespeicher vorgesehen ist.

Aus der Literaturstelle Bouguerra A. et al.: "An autonomous robotic system for load transportation", Emerging Technologies & Factory Automation, 2009, IEEE Conference, Piscataway, NJ, USA, 22. September 2009, Seiten 1-4, XP031575813, ist ein autonomes Robotersystem zum Transport von Lastregalen bekannt, wobei die Grundlagen von in Werkshallen automatisch geführten Fahrzeugen (AGVs) erläutert werden.

Ferner ist aus der weiteren Literaturstelle Daniel Lecking et al.: "Variable Pallet Pick-Up for Automatic Guided Vehicles in Industrial Environments", Emerging Technologies & Factory Automation, 2006, IEEE Conference, 1. September 2006, Seiten 1169-1174, XP031082663, eine Vorrichtung und ein Verfahren zur variablen Paletten-Aufnahme bekannt, wobei Laser-Scanner und an den Paletten angebrachte reflektierende Markierungen zum Lokalisieren von Paletten verwendet werden.

Es ist die Aufgabe der vorliegenden Erfindung ein autonomes Transportfahrzeug zu schaffen mit dem der schnelle Transport von Lastregalen in großen Werkhallen störungsfrei auch bei unebenem Boden und bei leichten Steigungen ausgeführt werden kann.

Erfindungsgemäß wird diese Aufgabe durch die Merkmale des Patentanspruchs 1 gelöst.

In den weiteren Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1: eine Anordnung von zu transportierenden Lastregalen
Fig. 2: eine Annäherung eines Transportfahrzeugs an Lastregale
Fig. 3: eine Orientierungs-Situation eines Transportfahrzeugs
Fig. 4: eine Seitenansicht eines beladenen Transportfahrzeugs
Fig.5: eine Draufsicht auf die Kinematik des Transportfahrzeugs
Fig.6: eine Detail-Darstellung der Kinematik des Transportfahrzeugs
Fig.7: eine Abschattungs-Situation von Empfangsmöglichkeiten

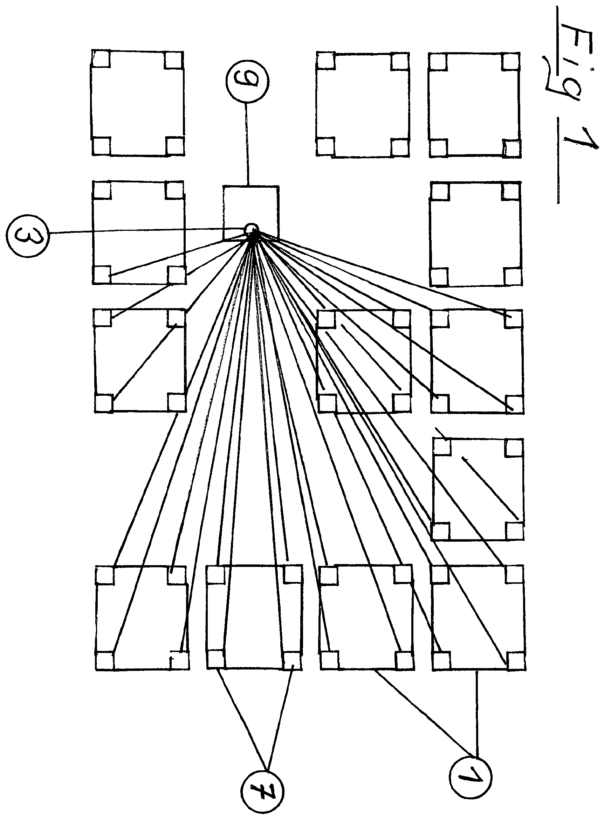

Die Fig.1 zeigt eine Anordnung von zu transportierenden Lastregalen.

In dieser Darstellung sind als Teilausschnitt einige, auf jeweils vier Regalpfosten 7 stehende, Lastregale 1 in der Draufsicht zu sehen deren genaue Lage von einem Transportfahrzeug 9 mittels eines Laser-Scanners 3 erfasst wird.

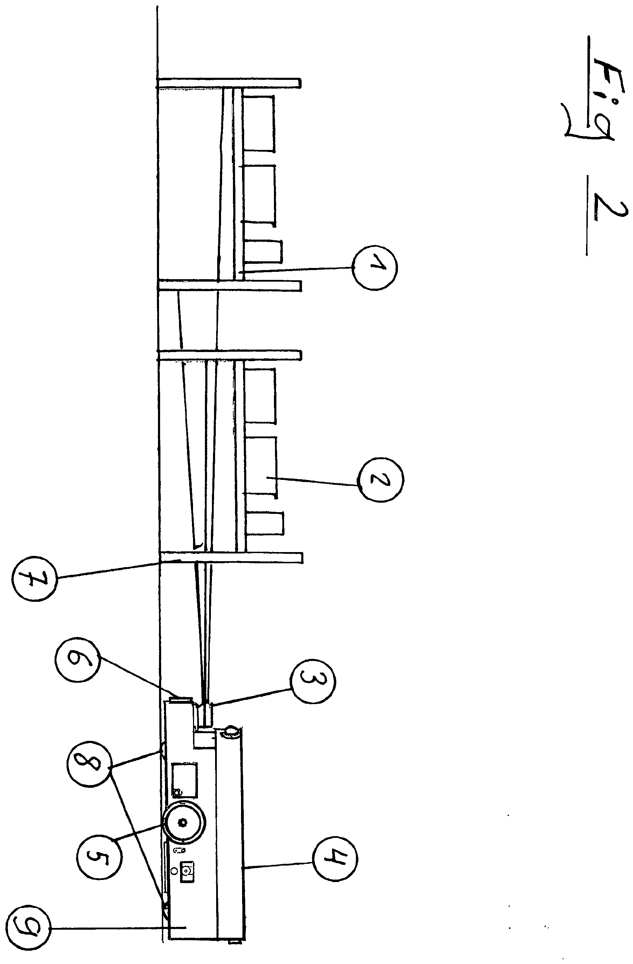

Die Fig.2 zeigt eine Annäherung eines Transportfahrzeugs 9 an Lastregale 1.

Im linken Bereich der Fig.2 sind zwei hintereinander stehende Lastregale 1 mit ihren Regalpfosten 7 und ihrem aufliegenden Transportgut 2 dargestellt. Diesen beiden Lastregalen 1 nähert sich ein Transportfahrzeug 9 mittels zweier Antriebsräder 5, von denen in der Seitenansicht lediglich eines zu erkennen ist, und einem vorderen und einem hinteren Stützrad 8. Zur Aufnahme eines Lastregals 1 weist das Transportfahrzeug 9 eine in der Höhe verstellbare Trägerplatte 4 auf. Zur Erfassung
der Umgebung eines Transportfahrzeugs 9 weist jedes dieser Fahrzeuge mindestens an der Frontseite einen Laser - Scanner 3 und einen Lichtfeld - Sensor 6 auf.

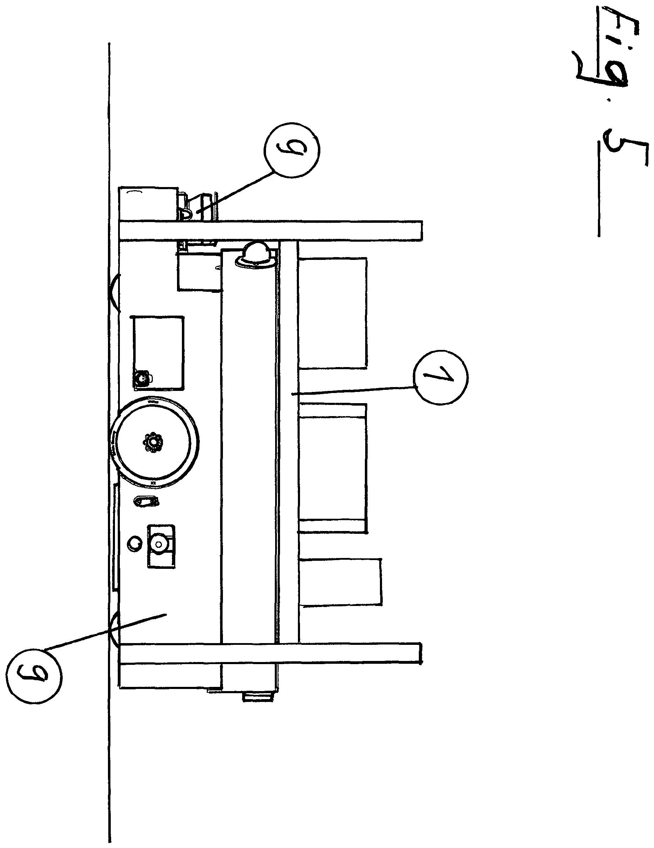

Hinsichtlich des verwendeten Lichtfeld - Sensors 6, wird auf die neue Entwicklung der so genannten Minilinsen verwiesen, die in der Form von hunderten von Minilinsen nach dem Lichtfeldprinzip optische Informationen sammeln die dann später zu Bildern mit einer gewünschten Auflösung und / oder einem gewünschten Blickwinkel datentechnisch zusammengestellt werden können. Solche Minilinsen sind 3 - D - fähig, billig herzustellen und folgen dem Prinzip eines Insektenauges.
Eine nähere Beschreibung des Mechanismus der Fortbewegung und des Anhebens eines Lastregals 1 erfolgt bei der Beschreibung der Fig.5.

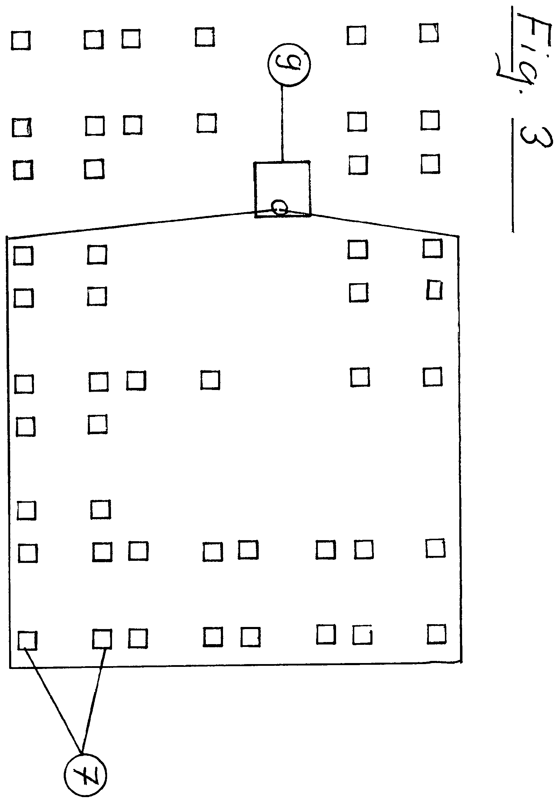

Die Fig.3 zeigt eine Darstellung von Regalpfosten als Orientierungshilfe.
Für ein Transportfahrzeug 9 stellt sich die von ihm befahrene Arbeitswelt als eine Ansammlung von Regalpfosten 7 dar. Jeder Regalpfosten 7 kann an jeder seiner vier Seiten eine Markierung in Form eines Barcodes oder DataMatrixcodes aufweisen, die ihn als Bestandteil eines bestimmten Lageregals ausweist und ihn für ein Transportfahrzeug 9 in der Hauptsache mittels seines Laser - Scanners von allen Seiten identifizierbar macht.

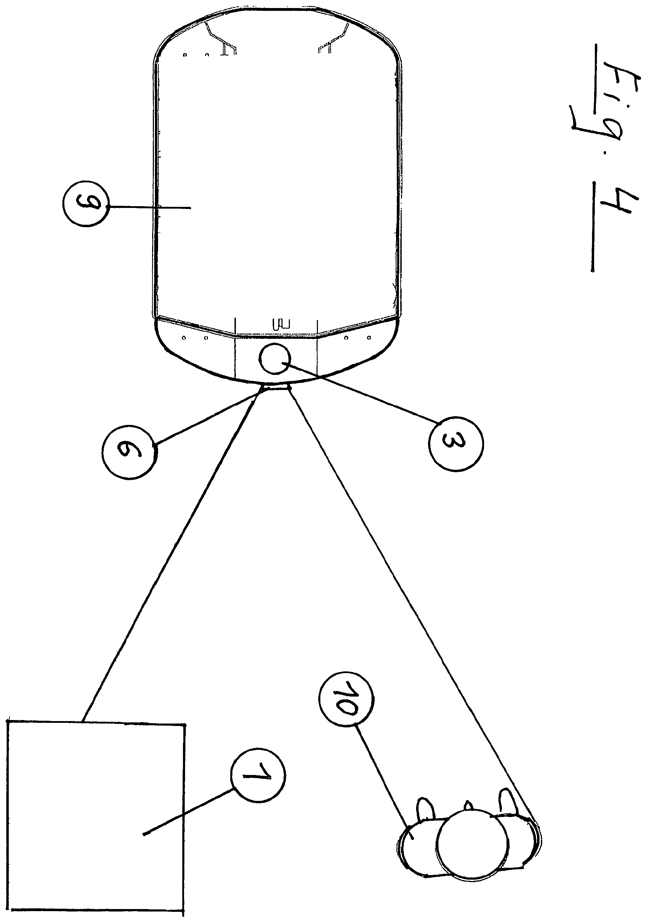

Die Fig.4 zeigt eine Orientierungs - Situation eines Transportfahrzeugs 9 mit realen Hindernissen.
Hierbei handelt es sich zum Einen um ein normales Lastregal 1, das wie vorher beschrieben, identifiziert werden kann und zum Anderen um eine Person 10, die eigentlich nicht in diese Umgebung gehört. Eine solche, ein ungewöhnliches Hindernis darstellende, Person 10 wird mittel eines Lichtfeld - Sensors von einem Transportfahrzeug 9 erkannt.

Die Fig.5 zeigt eine Seitenansicht eines beladenen Transportfahrzeugs 9. Seine Antriebsräder und die Stützräder berühren den Boden und das Lastregal 1 liegt auf der Trägerplatte des Transportfahrzeugs auf

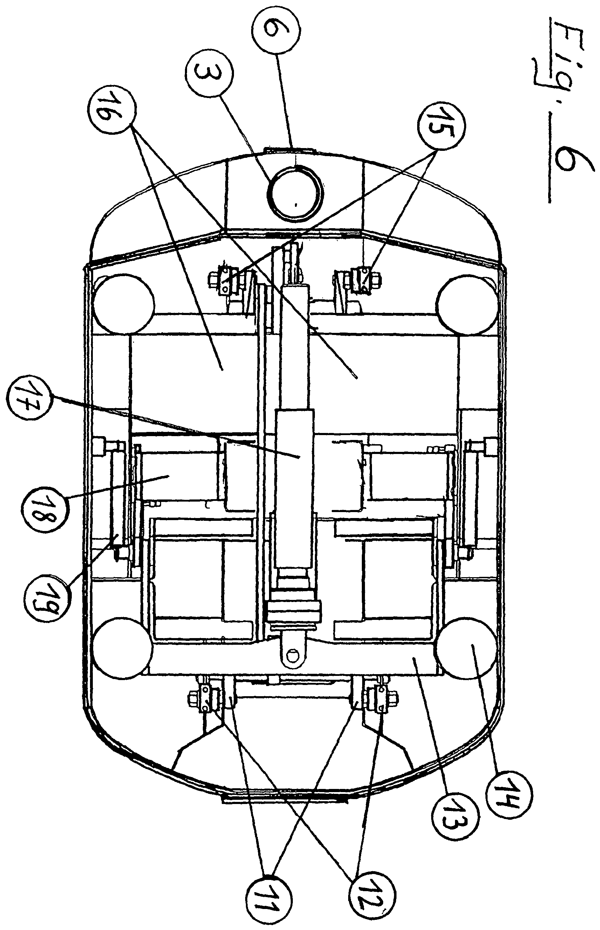

Die Fig.6 zeigt eine Draufsicht auf die Kinematik des Transportfahrzeugs 9.

In dieser Fig.6 ist in zentraler Lage in Längsrichtung ein Stellelement 17 zu erkennen das, bei einer Verlängerung in der Längsrichtung, eine Anhebung der vier eingezeichneten kreisförmigen Zentrierelemente 14 über, in dieser Darstellung nicht sichtbare, Hebelemente bewirkt. Die Zentrierelemente 14 fügen sich in entsprechende Vertiefungen der Trägerplatte ein. Als Teil der genannten Hebelelemente sind die hintere Tragplatten - Aufhängung 12 und die vordere Tragplattenaufhängung 15 zu sehen. Das Stellelement 17 stützt sich auf einen Querlenker 13 der über, hier nicht sichtbare, Hebelemente mit den beiden hinteren Hubstangenhebeln 11 verbunden ist.
In dieser Darstellung von oben sind beide Stellmotoren für die beiden Antriebsräder zu sehen, wobei lediglich der linke mit 18 bezeichnet ist. Die zu beiden Antriebsrädern führenden Federelemente stellen über, hier nicht erkennbare, Umlenkhebel sicher, dass die Antriebsräder auch auf unebenem Boden sicheren Bodenkontakt behalten. Auch hier ist lediglich das in Fahrtrichtung linksseitige Federelement mit 19 bezeichnet.
Mit 16 sind jeweils ein linksseitiger und ein rechtsseitiger Stellraum für Energiespeicher dargestellt. Hierbei kann es sich um elektrische Batterien oder um Energiespeicher für andere flüssige oder gasförmige Energieformen handeln.
Ein Laser - Scanner 3 und ein Lichtfeld - Sensor 6 sind an der Vorderseite des Transportfahrzeugs 9 angebracht.
Beide Arten von Sensoren können jedoch auch zusätzlich noch an den beiden Seitenflächen und/oder an der Rückseite eines Transportfahrzeugs angebracht sein.

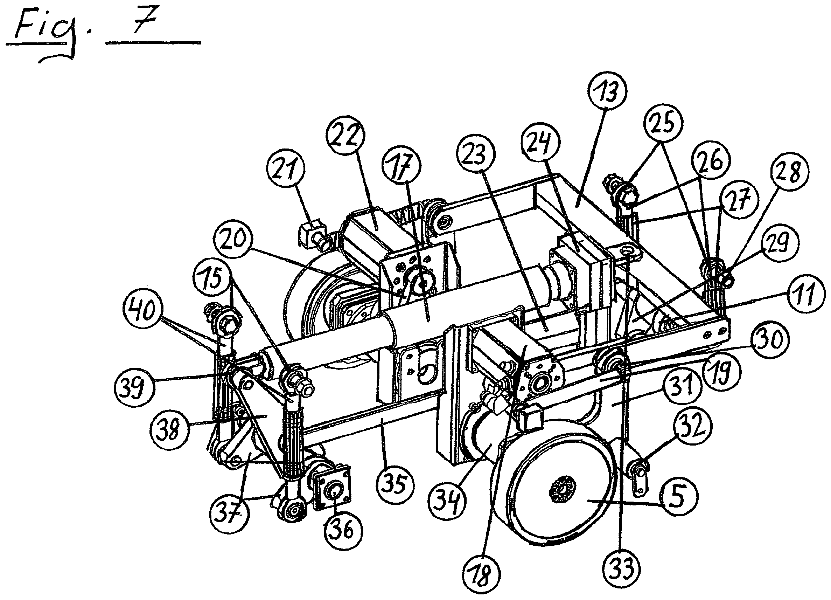

Die Fig.7 zeigt eine Detail - Darstellung der Kinematik des Transportfahrzeugs. Diese Abbildung stellt das Transportfahrzeug ohne das umhüllende Gehäuse dar. Auf Verbindungen zu dem Gehäuse wird an entsprechender Stelle hingewiesen. Zuerst wird die Kinematik der Antriebsräder erläutert
Im Vordergrund ist das, aus der Fig. 2 bekannte, linksseitige Antriebsrad 5 und die zugehörige Drehachse 32 zu erkennen die an dem, nicht näher bezeichneten, Gehäuse des Transportfahrzeugs befestigt ist. Das Achslager 34 für das linksseitige Antriebsrad 5 mit seinem darüber liegenden, als Antrieb für das Antriebsrad 5 dienenden, Servomotor 18 sind mittels eines, nicht näher bezeichneten und nur von hinten zu sehendem, Winkelblech zu einer Funktionseinheit verbunden. In diesem Winkelblech läuft ein Zahnriemen über den der Servomotor 18 die Rotationsachse des linksseitigen Antriebsrads 5 antreibt.
Auf der gegenüberliegenden Seite ist der entsprechende Servomotor 22 für den rechtsseitigen Antrieb zu erkennen. Auf dieser Seite ist das entsprechende Winkelblech in der gezeigten Darstellung von der Rückseite zu sehen. Hier ist der in diesem Winkelblech laufende entsprechende Zahnriemen 20 gekennzeichnet. Die gesamte Funktionseinheit, bestehend aus dem Antriebsrad 5 mit dem Achslager 34, dem Servomotor 18 und dem Winkelblech mit seinem Zahnriemen, ist über einen Winkelhebel 31 um die, schon oben erwähnte, Drehachse 32 schwenkbar. Der Winkelhebel 31 ist über ein Gelenk 30 an einem U - förmigen, über nahezu die gesamte Breite des Transportfahrzeugs verlaufenden, Querlenker 13 angelenkt, an dessen anderem Ende das rechtsseitige Antriebsrad entsprechend befestigt ist.
An dem Gelenk 30 ist weiter ein Federelement 19 gelagert, dessen anderer Lagerungspunkt am Gehäuse des Transportfahrzeugs befestigt ist. Auf der in der Fig.7 sichtbaren linken Seite des Transportfahrzeugs ist dieser Anlenkpunkt als klötzchenförmige, kaum erkennbare über dem Antriebsrad 5 gezeichnete, Lagerung gezeigt.
Dagegen ist auf der gegenüberlegenden Seite dieser Punkt als Anlenkpunkt 21 des entsprechenden rechten Federelements bezeichnet. Das Federelement 19 dient dem Zweck, über den Winkelhebel 31 das Antriebsrad 5 auf die Bodenfläche zu drücken und somit den Bodenkontakt des Antriebsrads 5 zu verbessern. Entsprechendes gilt für das gegenüber liegende rechte Antriebsrad.
Eine weitere kinematische Einrichtung wird im Folgenden zum Anheben eines Lastregals 1 erläutert.
Um ein Lastregal 1 aufnehmen zu können ist es erforderlich, dass das Transportfahrzeug nach dem Darunterfahren unter das Lastregal 1 dieses anhebt und seinen Bodenkontakt löst um es transportieren zu können.
Diesem Zweck dienen in direktem Kontakt die vorderen Hubstangen 40 und die hinteren Hubstangen 26.
Angehoben und abgesenkt werden die Hubstangen 40 und 26 mittels eines Stellelements 17, das wiederum mittels einer Gewindespindel über einen ein - und ausfahrbaren Zylinder über einen Gelenkkopf 39 und einen angelenkten Hubdreh - Hebel 38 die hierfür notwendigen Kräfte aufbringt.

Aus der Fig.7 ist linksseitig deutlich zu erkennen wie der Hubdreh - Hebel 38 im Zusammenwirken mit jeweils einem vorderen Hubstangenhebel 37 mittels entsprechender Drehbewegungen um eine Drehachse 36, die mit dem Gehäuse des Transportfahrzeugs verbunden ist, die notwendigen Anhebungen oder Absenkungen der beiden vorderen Hubstangen 40 bewirkt.
Die vorderen Hubstangen 40 tragen jeweils die entsprechende vordere Trägerplatten - Aufhängung
Gleichzeitig ist diesem Bereich der Fig.7 zu entnehmen, dass an dem Hubdreh - Hebel 38 eine Schubstange 35 angelenkt ist, die die Bewegungen des Hubdreh - Hebels 38 über einen Achshebel 29 auf jeweils einen hinteren Schubstangenhebel 11 überträgt. Die Bewegungen der hinteren Schubstangenhebel 11 führen zu den notwendigen Anhebungen oder Absenkungen der beiden hinteren Hubstangen 26. Die hinteren Hubstangen 26 tragen jeweils die entsprechende hintere Tragplatten - Aufhängung 25, ein entsprechendes Verbindungselement mit dem Gehäuse ist mit 28 bezeichnet. Die vordere Tragplatten - Aufhängung ist mit 15 bezeichnet.

Die Bewegung des Stellelements 17, bzw. seiner Gewindespindel, erfolgt über einen Antrieb 23 und eine, die Kraft umleitende, Kraftübertragung 24. Die Kraftübertragung 24 ist mittels eines Gabelkopfs 33 am Querlenker 13 befestigt. Da der Gabelkopf 33 drehbar am Querlenker 13 gelagert ist, kann sich der Querlenker 13, als Verbindungselement zwischen den Winkelhebeln 31 und seinem gegenüberliegenden Pendant, bewegen und so wird ermöglicht, dass die beiden Antriebsräder voneinander unabhängige, vertikale Schwenkbewegungen ausführen können.
Die vorderen Hubstangen 40 und die die hinteren Hubstangen 26 weisen noch jeweils zusätzliche Stellelemente auf die, die gesamte Trägerplatte aus jeweils einer, der Lagesicherung beim Fahrbetrieb dienenden, Raststellung herausheben, bevor der eigentliche Vorgang der Anhebung des Transportguts beginnt. Beispielhaft sind hier für die hinteren Hubstangen die Stellelemente 27 bezeichnet. Die Ansteuerung der genannten Stellelemente kann separat und unabhängig von der vorher beschriebenen Anhebung des Transportguts erfolgen.
Insgesamt wird durch die aufgezeigte Anordnung der Hubstangen 40 und 26, die dazwischen liegende Hebelanordnungen und das Stellelement 17 in Zusammenwirkung mit dem Querlenker 13, sowie dessen Einwirken auf den Winkelhebel 31 und sein Pendant, erreicht, dass der Schwerpunkt der Last von dem Lastregal direkt im Bereich der Antriebsräder liegt.
Zur Erfassung der Neigung des Transportfahrzeugs und des Transportguts wird ein besonderer Sensor verwendet, der jedoch nicht extra bezeichnet ist.
Da das Transportfahrzeug den Transport von Transportgut über schräge Ebenen ermöglicht, kann in vielen Fällen auf teuere und steuerungstechnisch aufwendige Liftanlagen verzichtet werden.
Es kann in einer besonderen Ausbildung vorgesehen sein, dass der Schwerpunkt des Lastregals 1 mittels Sensoren erfasst, und das Ergebnis einer solchen Schwerpunkt - Ermittlung zur Steuerung der Stellelemente der Hubstangen 40 und 26 verwendet wird.

Weiter kann es in einer besonderen Ausgestaltung vorgesehen sein, dass Sensoren zur Erfassung der Drehbewegung der Antriebsräder 5 vorgesehen sind, die auch in Abhängigkeit von der Geschwindigkeit des Transportfahrzeugs den Schlupf an jedem Antriebsrad 5 ermitteln können.
Weiter kann es vorgesehen sein, mittels eines Neigungssensors die Neigung eines Lastregals 1 ermittelt wird.
Zur Steuerung der beschriebenen Transportfahrzeuge wird bevorzugt ein bekanntes Verfahren eingesetzt das von der Technischen Universität Berlin entwickelt wurde und am 10. Oktober 2007 veröffentlicht wurde unter: Dynamic Routing of Automated Guided Vehicles in Real - time. (Ewgenij Gawrilow, Ekkehard Köhler, Rolf H.Möhring, Björn Stenzel) [http://www.math.tu-berlin.de/coga/publications/techreports/]
Es handelt sich hierbei im Wesentlichen um einen zweiteiligen Algorithmus, dessen erster Teil einen vorbereitenden Schritt umfasst und dessen zweiter Teil in Echtzeit eine Route berechnet und dabei für jeden Abschnitt ein bestimmtes Zeitfenster vorsieht

Die Anwendung des hier beschriebenen Verfahrens betraf ein AGV - Netzwerk im Container - Terminal Altenwerder im Hamburger Hafen. Die Anwendung desselben Verfahrens zum störungsfreien Betrieb von Automated Guided Vehicles in einem Warenhaus erscheint dagegen neu. Die Steuerung der komplexen Bewegungsvorgänge und die Signalverarbeitung der verwendeten Sensoren erfordern ein spezielles Steuerungsprogramm.

### Bezugszeichenliste

- 1: Lastregal
- 2: Transportgut
- 3: Laser - Scanner, 3D - Scanner zum Kollissionsschutz
- 4: Trägerplatte, Hubplatte
- 5: Antriebsrad
- 6: Lichtfeld - Sensor
- 7: Regalpfosten
- 8: Stützrad
- 9: Transportfahrzeug, Fahrzeugkörper
- 10: Person
- 11: hintere Hubstangenhebel
- 12: hintere Tragplatten - Aufhängung
- 13: Querlenker
- 14: Zentrierelement
- 15: vordere Tragplatten - Aufhängung
- 16: Stellraum für Energiespeicher
- 17: Stellelement, Gewindespindel
- 18: Servomotor für linksseitiges Antriebsrad
- 19: Federelement
- 20: Zahnriemen für den rechtsseitigen Antrieb
- 21: Anlenkpunkt des rechtsseitigen Federelements am Gehäuse
- 22: Servomotor für den rechtsseitigen Antrieb
- 23: Antrieb für das Stellelement 17
- 24: Kraftübertragung des Antriebs 23 zum Stellelement 17
- 25: hintere Tragplatten - Aufhängung mit Verbindungselementen
- 26: hintere Hubstange
- 27: Stellelement für eine hintere Hubstange
- 28: Verbindungselement für eine hintere Tragplatten - Aufhängung 25
- 29: Achshebel
- 30: Gelenk eines Winkelhebels 31
- 31: Winkelhebel
- 32: Drehachse
- 33: Gabelkopf
- 34: Achslager für das linksseitige Antriebsrad
- 35: Schubstange
- 36: Drehachse für eine Hubstangenhebel 37
- 37: vorderer Hubstangenhebel
- 38: Hubdreh - Hebel
- 39: Gelenkkopf
- 40: vordere Hubstange

## Patentansprüche

1. Transportfahrzeug zum störungsfreien Transport von Lastregalen in Werkshallen mit teilweise autonomem Fahrbetrieb mit den folgenden Merkmalen:
a) einem Fahrzeugkörper (9) mit einer Trägerplatte (4) zum Aufnehmen und Transportieren eines Lastregals (1) mit Transportgut (2), mit zwei, beidseitig in der Mitte des Fahrzeugkörpers (9) an jeweils einer gesondert gelagerten Drehachse (32) separat angetriebenen Antriebsrädern (5), wobei an der Vorderseite und an der Hinterseite des Fahrzeugkörpers (9) jeweils mindestens ein Stützrad (8) vorgesehen ist,
wobei eine Querlenkung vorhanden ist, die vertikale Bewegungen der Antriebsräder ermöglicht, und
b) einem zentral angeordneten Stellelement (17) zum Anheben oder Absenken der Trägerplatte (4), und
c) wobei das Transportfahrzeug ein System zur Energieversorgung des Fahrzeugkörpers (9) aufweist, wobei im Fahrzeugkörper (9) Stellraum (16) für entsprechende Energiespeicher vorgesehen ist,
**dadurch gekennzeichnet, dass**
d) mittels eines Querlenkers (13), der die jeweils über einen Winkelhebel (31) um eine Drehachse (32) schwenkbaren Antriebsräder (5) verbindet, gewährleistet ist, dass diese voneinander unabhängige vertikale Bewegungen ausführen können,
e) mittels eines zentral angeordneten Stellelements (17) über einen Hubdreh-Hebel (38) und eine mit diesem verbundene Schubstange (35) zwei vordere Hubstangen (40) und zwei hintere Hubstangen (26) zum Anheben oder Absenken der Trägerplatte (4) bewegt werden können, wobei die vorderen Hubstangen (40) jeweils ein Stellelement und die hinteren Hubstangen (26) jeweils ein Stellelement zur separaten Höheneinstellung aufweisen,
f) das Transportfahrzeug mittels eines Systems zur Energieversorgung über induktive, im Boden verlegte Leitungen, oder über stationär anfahrbare Energieversorgungs-Stationen für die Zufuhr elektrischer, flüssiger oder gasförmiger Energie versorgt wird, und
g) zur Erfassung der Umgebung beim störungsfreien Transport mindestens ein 3D-Scanner (3) und mindestens ein Lichtfeld-Sensor (6) im vorderen Bereich des Fahrzeugkörpers (9) angebracht sind.

2. Transportfahrzeug nach Anspruch 1, **dadurch gekennzeichnet,**
**dass** auf jeder Seite des Transportfahrzeugs mindestens ein Laser-Scanner (3) und mindestens ein Lichtfeld-Sensor (6) vorgesehen sind.

3. Transportfahrzeug nach einem der vorhergehenden Ansprüche, **dadurch gekennzeichnet,**
**dass** der Schwerpunkt des Lastregals (12) mittels Sensoren erfasst, und dass das Ergebnis einer solchen Schwerpunkt-Ermittlung zur Steuerung der Stellelemente für die Hubstangen (40) und (26) verwendet wird.

4. Transportfahrzeug nach einem der vorhergehenden Ansprüche, **dadurch gekennzeichnet,**
**dass** Sensoren zur Erfassung der Drehbewegung der Antriebsräder (5) vorgesehen sind, die auch in Abhängigkeit von der Geschwindigkeit des Transportfahrzeugs den Schlupf an jedem Antriebsrad (5) ermitteln können.

## Claims

1. Transport vehicle for transporting storage shelves by partially autonomous operation and without interference in factory buildings, the transport vehicle having the following features:
a) a vehicle body (9) having a support plate (4) for receiving and transporting a storage shelf (1) having transported goods (2), having two separately driven drive wheels (5) on both sides of one in each case individually mounted rotation axle (32) in the center of the vehicle body (9), wherein in each case at least one support wheel (8) is provided on the front side and on the rear side of the vehicle body (9),
wherein a transverse linkage is provided which enables vertical movements of the drive wheels, and
**characterized in that**
b) a centrally disposed control member (17) for lifting or lowering the support plate (4), and
c) wherein the transport vehicle has a system for supplying energy to the vehicle body (9), wherein installation space (16) for corresponding energy storage units is provided in the vehicle body (9),
d) a transverse link (13) which connects the drive wheels (5) which are in each case by way of an angular lever (31) pivotable about a rotation axle (32), it is ensured that said drive wheels (5) may execute mutually independent vertical movements,
e) by means of a centrally disposed control member (17), two front lifting rods (40) and two rear lifting rods (26) for lifting or lowering the support plate (4) may be moved by way of a lift-and-rotate lever (38) and by way of a push rod (35) connected to the latter,
wherein for separate height adjustment the front lifting rods (40) in each case have one control member, and the rear lifting rods (26) in each case have one control member,
f) the transport vehicle is supplied with energy by means of a system for supplying energy by way of inductive lines installed in the floor, or by way of energy supply stations which are for feeding electrical, liquid, or gaseous energy and are accessible when stationary, and
g) in order to detect the environment during transporting without interference, at least one 3-D scanner (3) and at least one light-field sensor (6) are attached in the front region of the vehicle body (9).

2. Transport vehicle according to Claim 1, **characterized in that** at least one laser scanner (3) and at least one light-field sensor (6) are provided on each side of the transport vehicle.

3. Transport vehicle according to either of the preceding claims, **characterized in that** the center of gravity of the storage shelf (12) is detected by means of sensors, and **in that** the result of such center-of-gravity determination is used for controlling the control members of the lifting rods (40) and (26).

4. Transport vehicle according to one of the preceding claims, **characterized in that** sensors for detecting the rotation movement of the drive wheels (5) are provided, which sensors may also determine slippage on each drive wheel (5) dependent on the speed of the transport vehicle.

## Revendications

1. Véhicule de transport pour le transport sans incident de rayonnages dans des ateliers présentant un fonctionnement partiellement autonome avec les caractéristiques suivantes :
a) un corps de véhicule (9) avec une plaque porteuse (4) pour recevoir et transporter un rayonnage (1) avec des marchandises transportées (2), avec deux roues d'entraînement (5) séparément entraînées sur respectivement un axe de rotation (32) logé à part des deux côtés au centre du corps de véhicule (9), une roue de support (8) étant au moins respectivement prévue sur le côté avant et sur le côté arrière du corps de véhicule (9),
une direction transversale existant, laquelle permet les mouvements verticaux des roues d'entraînement, et
b) un élément de commande (17) disposé au centre pour lever ou abaisser la plaque porteuse (4), et
c) le véhicule de transport comportant un système pour l'alimentation en énergie du corps de véhicule (9), compartiment (16) étant prévu dans le corps de véhicule (9) pour des accumulateurs d'énergie correspondants,
**caractérisé en ce que**
d) au moyen d'un bras transversal (13), qui relie respectivement les roues d'entraînement (5) pivotables autour d'un axe de rotation (32) par le biais d'un levier coudé (31), il est assuré que ces mouvements verticaux indépendants les uns des autres peuvent être effectués,
e) deux barres de levage avant (40) et deux barres de levage arrière (26) pour lever ou abaisser la plaque porteuse (4) pouvant être déplacées au moyen d'un élément de commande (17) disposé au centre par le biais d'un levier à double mouvement (38) et d'une barre de poussée (35) reliée à celui-ci, les barres de levage avant (40) comportant respectivement un élément de commande et les barres de levage arrière (26) comportant respectivement un élément de commande pour le réglage en hauteur séparé,
f) le véhicule de transport étant alimenté au moyen d'un système pour l'alimentation en énergie par le biais de conducteurs inductifs placés dans le sol ou par le biais de postes d'alimentation en énergie pouvant être approchés de façon stationnaire pour l'apport en énergie électrique, liquide ou gazeuse, et
g) au moins un analyseur 3D (3) et au moins un capteur à champ lumineux (6) étant monté dans la zone avant du corps de véhicule (9) pour la saisie de l'environnement pour un transport sans incident.

2. Véhicule de transport selon la revendication 1, **caractérisé en ce**
**que** sur chaque côté du véhicule de transport sont prévus au moins un analyseur à laser (3) et au moins un capteur à champ lumineux (6).

3. Véhicule de transport selon l'une quelconque des revendications précédentes, **caractérisé en ce que** le centre de gravité du rayonnage (12) est saisi au moyen de capteurs et **en ce que** le résultat d'une telle détermination du centre de gravité est utilisé pour le pilotage des éléments de commande pour les barres de levage (40) et (26) .

4. Véhicule de transport selon l'une quelconque des revendications précédentes, **caractérisé en ce que** des capteurs sont prévus pour la saisie du mouvement rotatif des roues d'entraînement (5), qui peuvent également déterminer le patinage sur chaque roue d'entraînement (5) en fonction de la vitesse du véhicule de transport.
